# EUROPEAN PATENT SPECIFICATION

(11) **EP 4 422 232 B1**
(45) Date of publication and mention of the grant of the patent: **04.11.2026**
(21) Application number: 22891629.2
(22) Date of filing: 14.09.2022
(51) Int. Cl.: H04W 8/18, H04W 8/24, H04W 88/06

(54) **RESOURCE ALLOCATION METHOD, COMMUNICATION APPARATUS, COMPUTER-READABLE STORAGE MEDIUM AND CHIP SYSTEM**
RESSOURCENZUWEISUNGSVERFAHREN, KOMMUNIKATIONSVORRICHTUNG, COMPUTERLESBARES SPEICHERMEDIUM UND CHIPSYSTEM
PROCÉDÉ D'ATTRIBUTION DE RESSOURCES, APPAREIL DE COMMUNICATION, SUPPORT DE STOCKAGE LISIBLE PAR ORDINATEUR ET SYSTÈME DE PUCES

(30) Priority: 11.11.2021 CN 202111334248; 30.01.2022 CN 202210114769
(43) Date of publication of application: 28.08.2024
(73) Proprietor: Honor Device Co., Ltd., Shenzhen, Guangdong 518040 (CN)
(72) Inventor: SHEN, Li, Shenzhen, Guangdong 518040 (CN)
(74) Representative: Gill Jennings & Every LLP
(86) International application number: PCT/CN2022/118814
(87) International publication number: WO 2023/082824

(56) References cited:
- WO-A1-2020/191524
- WO-A1-2021/155677
- WO-A1-2021/163979
- CN-A- 111 278 001
- CN-A- 112 351 418
- CN-A- 113 259 925
- CHINA TELECOM: "Support of UE capabilities coordination for Dual Tx/Dual Rx Multi-USIM UEs", 3GPP TSG-RAN WG2 #112E R2-2008832, 19 October 2020 (2020-10-19), XP051940438

## Description

### TECHNICAL FIELD

This application relates to the field of terminal technologies, and in particular, to a resource allocation method, a communication apparatus, a computer-readable storage medium and a chip system.

### BACKGROUND

With the popularization and development of terminal technologies, terminal devices with dual SIM cards have been widely used. For example, a plurality of communication cards, such as two communication cards, may be disposed in a terminal device, and a user may implement data communication between devices through one of the two communication cards, or both communication cards.

Normally, for a multi-mode multi-card device with a plurality of communication cards (for example, including a primary card and a secondary card) on the market, in a process in which the dual-card dual-active device uses the primary card, the primary card can report a required communication resource to a network side. When the primary card is switched to the secondary card, the secondary card needs to re-report the required communication resource to the network side. As a result, the switching process between the primary card and the secondary card takes a long time, making it impossible for the terminal device to implement high-efficiency communication based on the plurality of communication cards.
WO 2021/155677 A1 provides a dual-SIM dual-standby dual-active communication method, device and storage medium for realizing dual-SIM dual-standby dual-active communication.
WO 2020/191524 A1 is generally directed to extended signaling protocols for multi-subscriber identity module user-equipment for new radio.

### SUMMARY

Embodiments of this application provide a resource allocation method and apparatus, for a terminal device to match proper communication resources for a data service, to improve communication efficiency of a multi-mode multi-card terminal device. The communication resources may include: a resource used for supporting a long term evolution (Long Term Evolution, LTE) service, a resource used for supporting a new radio (New Radio, NR) service, and a capability of a modem (Modem).

According to a first aspect, an embodiment of this application provides a resource allocation method, applied to a terminal device in accordance with appended claim 1. In this way, the terminal device can match proper communication resources for the data service, to improve communication efficiency of a multi-mode multi-card terminal device.

In a possible implementation, the first resource includes a first component carrier CC, the second resource includes a second CC, and that the terminal device reports available communication resources to a network device based on at least a quantity of communication cards and a network standard of a network accessed by the communication card includes: when the target communication card is a first communication card and the terminal device determines to access an LTE network, the terminal device reports N first CCs to the network device for the first communication card, where N is a positive integer; or when the target communication card is the first communication card and the terminal device determines to access an NR network, the terminal device reports M second CCs to the network device for the first communication card, where M is a positive integer. In this way, when the terminal device accesses the network, maximum communication resources are obtained for one card.

In a possible implementation, that the terminal device reports available communication resources to a network device based on at least a quantity of communication cards and a network standard of a network accessed by the communication card includes: the terminal device reports the available communication resources to the network device based on the quantity of communication cards, the network standard of the network accessed by the communication card, and a dual card concurrent state of the terminal device. In this way, when the terminal device is a dual-card device, the terminal device can allocate proper communication resources to two cards based on a data service.

In a possible implementation, that the terminal device reports the available communication resources to the network device based on the quantity of communication cards, the network standard of the network accessed by the communication card, and a dual card concurrent state of the terminal device includes: when the target communication card includes the first communication card and a second communication card, the terminal device accesses the LTE network, and the terminal device is not in the dual card concurrent state, the terminal device respectively reports N first CCs to the network device for the first communication card and the second communication card; or when the target communication card includes the first communication card and the second communication card, the terminal device accesses the NR network, and the terminal device is not in the dual card concurrent state, the terminal device respectively reports M second CCs to the network device for the first communication card and the second communication card. In this way, the terminal device can respectively report maximum communication resources for the two cards that do not satisfy dual card concurrency.

In a possible implementation, that the terminal device reports the available communication resources to the network device based on the quantity of communication cards, the network standard of the network accessed by the communication card, and a dual card concurrent state of the terminal device includes: when the target communication card includes the first communication card and a second communication card, the terminal device accesses the LTE network, and the terminal device is in the dual card concurrent state, the terminal device respectively reports N-1 first CCs to the network device for the first communication card and the second communication card; or when the target communication card includes the first communication card and the second communication card, the terminal device accesses the NR network, and the terminal device is in the dual card concurrent state, the terminal device respectively reports M-1 second CCs to the network device for the first communication card and the second communication card. In this way, the terminal device can respectively report relatively high communication resources for the two cards that satisfy the dual card concurrency.

In a possible implementation, that the terminal device determines a target communication card performing a data service, and allocates communication resources to the target communication card includes: when the terminal device determines that the data service is from the first communication card, and the terminal device accesses the LTE network, the terminal device allocates at most N-1 first CCs to the first communication card, and allocating one first CC to the second communication card; or when the terminal device determines that the data service is from the first communication card, and the terminal device accesses the NR network, the terminal device allocates at most M-1 second CCs to the first communication card, and allocating one second CC to the second communication card. In this way, when the data service is in the first communication card, the terminal device can allocate more communication resources to the first communication card.

In a possible implementation, that the terminal device determines a target communication card performing a data service, and allocates communication resources to the target communication card includes: when the terminal device determines that the data service is from the second communication card, and the terminal device accesses the LTE network, the terminal device allocates at most N-1 first CCs to the second communication card, and allocating one first CC to the first communication card; or when the terminal device determines that the data service is from the second communication card, and the terminal device accesses the NR network, the terminal device allocates at most M-1 second CCs to the second communication card, and allocating one second CC to the first communication card. In this way, when the data service is in the second communication card, the terminal device can allocate more communication resources to the first communication card.

In a possible implementation, that the terminal device allocates the communication resources to the target communication card based on the target communication card performing the data service includes: when the terminal device determines that the data service is from the first communication card and the second communication card, the terminal device allocates communication resources to the first communication card and the second communication card based on network quality of the first communication card, network quality of the second communication card, traffic data of the first communication card, and traffic data of the second communication card. In this way, when the data service is simultaneously in the first communication card and the second communication card, the terminal device can allocate proper communication resources to the two communication cards based on the network quality and the traffic data.

In a possible implementation, the network quality is positively correlated with the communication resources; and the traffic data is positively correlated with the communication resources.

In this way, the terminal device can report the communication resources in scenarios of startup, restarting, or exiting the airplane mode, to avoid an impact of switching between the two cards on re-reporting the communication resources.

According to a second aspect, an embodiment of this application provides a communication apparatus in accordance with appended claim 10.

According to a third aspect, an embodiment of this application provides a computer-readable storage medium in accordance with appended claim 11.

According to a fourth aspect, this application provides a chip system in accordance with appended claim 12.

It should be understood that the second aspect to the fourth aspect of this application correspond to the technical solution of the first aspect of this application, and the beneficial effects obtained in each aspect and the corresponding feasible implementations are similar. Details are not described herein again.

### BRIEF DESCRIPTION OF DRAWINGS

FIG. 1 is a schematic diagram of a scenario according to an embodiment of this application;
FIG. 2 is a schematic diagram of a hardware structure of a terminal device according to an embodiment of this application;
FIG. 3 is a schematic diagram of a structure of a Modem according to an embodiment of this application;
FIG. 4 is a schematic flowchart of a resource allocation method according to an embodiment of this application;
FIG. 5A, FIG. 5B, FIG. 5C, and FIG. 5D are a schematic diagram of an interface of turning on dual card concurrency according to an embodiment of this application;
FIG. 6 is a schematic diagram of an interface of turning on a data service according to an embodiment of this application;
FIG. 7 is a schematic flowchart of a method for allocating Modem capabilities according to an embodiment of this application;
FIG. 8 is a schematic diagram of a structure of a resource allocation apparatus according to an embodiment of this application;
FIG. 9 is a schematic diagram of a hardware structure of another terminal device according to an embodiment of this application; and
FIG. 10 is a schematic diagram of a structure of a chip according to an embodiment of this application.

### DESCRIPTION OF EMBODIMENTS

To clearly describe the technical solutions in embodiments of this application, in embodiments of this application, terms such as "first" and "second" are used to distinguish between same items or similar items with basically the same functions and effects. For example, a first value and a second value are merely intended to distinguish between different values, but not to limit a sequence of the values. A person skilled in the art may understand that the terms "first", "second", and the like do not limit a quantity and an execution order, and the terms "first", "second", and the like are not limited to be necessarily different.

It should be noted that, in this application, terms such as "exemplary" or "for example" is used to represent giving an example, an illustration, or a description. Any embodiment or design solution described as "exemplary" or "for example" in this application should not be construed as more preferred or advantageous than other embodiments or design solutions. Exactly, use of the terms such as "exemplary" or "for example" is intended to present a related concept in a specific manner.

In this application, "at least one" refers to one or more and "a plurality of" refers to two or more. "And/or" is a description of an association relationship between associated objects, and means that there may be three types of relationships. For example, A and/or B may mean that A exists alone, both A and B exist, and B exists alone, where A and B may be singular or plural. The character "/" usually indicates an "or" relationship between associated objects. "At least one of the following" or a similar expression thereof indicates any combination of these items, including a single item or any combination of a plurality of items. For example, at least one of a, b, or c may represent that a, b, c, a and b, a and c, b and c, or a, b, and c, where a, b, and c may be singular or plural.

Embodiments of this application may be applied to a wireless communication system. It should be noted that, the wireless communication system in embodiments of this application includes, but is not limited to: a Global System Of Mobile Communications (Global System Of Mobile Communications, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution LTE-A (LTE Advanced) system, an LTE frequency division duplex (Frequency Division Duplex, DDD) system, LTE time division duplex (Time Division Duplex, TDD), a universal mobile telecommunication system (Universal Mobile Telecommunication System, UMTS), a 5th generation mobile communication technology (5th Generation Mobile Networks, 5G) communication system, a new radio (New Radio, NR) communication system, a future 6th generation mobile communication technology (6th Generation Mobile Networks, 6G) communication system, a Bluetooth system, a Wi-Fi system, a satellite communication system, a device-to-device (Device-to-Device, D2D) communication system, a machine communication system, Internet of Vehicles, Internet of Things, more advanced communication systems, and the like.

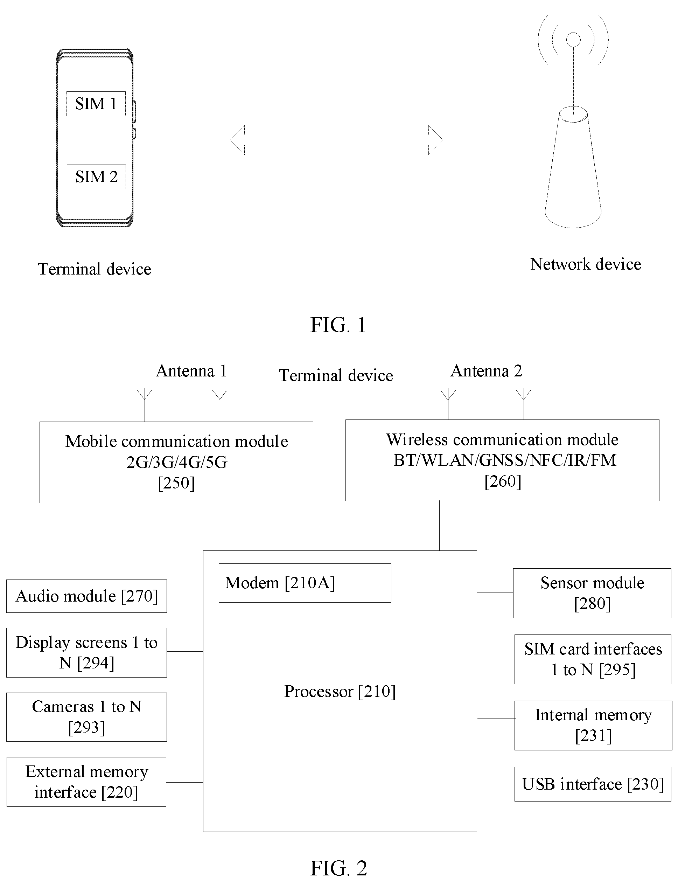

For example, FIG. 1 is a schematic diagram of a scenario according to an embodiment of this application. In the embodiment corresponding to FIG. 1, a communication system in this embodiment of this application mainly includes a network device or a terminal device. An example in which the terminal device is a mobile phone is used for description, and the example does not constitute a limitation on this embodiment of this application.

As shown in FIG. 1, the terminal device may include a plurality of communication cards, for example, all the plurality of communication cards may be subscriber identification modules (Subscriber Identification Modules, SIMs), such as an SIM 1 and an SIM 2.

Generally, the terminal device may be a dual-card single-standby device, or may be a dual-card dual-active (Dual SIM Dual Active, DSDA) device (or a dual card concurrent device, or a front-end time-division multiplexing device, or the like), and therefore, the terminal device may include two SIM cards, such as the SIM 1 and the SIM 2.

For the dual-card single-standby device, it may be understood that the terminal device includes two cards, but only one card can be supported for performing service processing at the same time. In the dual-card single-standby device, communication capabilities of the two cards is the same as a communication capability of any single card. For example, both the two cards can have a maximum communication capability.

However, the dual-card single-standby device cannot support concurrent processing of dual card services.

For the dual-card dual-active device, it may be understood that the terminal device includes two cards, and can support the two cards for performing service processing at the same time. In the dual-card dual-active device, communication capabilities of the two cards may be different, for example, a primary card may have a higher communication capability, and a secondary card has a lower communication capability. For example, the primary card in the two cards may support an NR service, and the secondary card of the two cards may support an LTE service and other scenarios.

However, when the primary card is in a scenario in which a network signal is weak, affected by the network signal, communication quality of the primary card is weak. In addition, since the secondary card is limited by the communication capability, both the primary card and the secondary card cannot implement good communication quality. Therefore, a difference between the communication capabilities of the primary card and the secondary card affects communication efficiency of the two cards. In addition, in a process in which the dual-card dual-active device uses the primary card, the primary card can report a required communication resource to a network side, and when the primary card is switched to the secondary card, the secondary card needs to report a required communication resource to the network side. As a result, the switching process between the primary card and the secondary card takes a long time, and therefore, the switching between the primary card and the secondary card also affects the communication efficiency of the two cards.

In view of this, an embodiment of this application provides a resource allocation method. According to the method, a terminal device can allocate proper communication resources to a primary card and a secondary card based on situations in which a data service is processed in the primary card, a data service is processed in the secondary card, or a data service is processed in the primary card and the secondary card at the same time. This can maximize resource utilization when a plurality of cards concurrently process data services, and further enhance a concurrent processing capability of the terminal device significantly and improve communication efficiency.

It may be understood that the communication resources may include: a resource used for supporting an LTE service (or an LTE resource), a resource used for supporting an NR service (or an NR resource), a Modem processing capability, and the like. Both the resource used for supporting the LTE service and the resource used for supporting NR may include: a quantity of antennas, a time domain resource, a frequency domain resource, a quantity of component carriers (Component Carriers, CCs), and the like. In this embodiment of this application, an example in which the LTE resource is the quantity of CCs and the NR resource is the quantity of CCs is used for illustration, and the example does not constitute a limitation on this embodiment of this application.

It may be understood that the terminal device may also be referred to as a terminal (Terminal), user equipment (User Equipment, UE), a mobile station (Mobile Station, MS), a mobile terminal (Mobile Terminal, MT), and the like. The terminal device may be a mobile phone (Mobile Phone) with a touch screen, a smart TV, a wearable device, a tablet computer (Pad), a computer with a wireless transceiver function, a virtual reality (Virtual Reality, VR) terminal device, an augmented reality (Augmented Reality, AR) terminal device, a wireless terminal in industrial control (Industrial Control), a wireless terminal in self-driving (Self-driving), a wireless terminal in remote medical surgery (Remote Medical Surgery), a wireless terminal in smart grid (Smart Grid), a wireless terminal in transportation safety (Transportation Safety), a wireless terminal in a smart city (Smart City), a wireless terminal in a smart home (Smart Home), and the like. A specific technology and a specific device form used in the terminal device is not limited in this embodiment of this application.

The network device is a device used for communicating with the terminal device, for example, the network device may be a base station (Base Transceiver Station, BTS) in a GSM system or a CDMA, or may be a base station (NodeB, NB) in a WCDMA system, an evolutional base station (Evolutional NodeB, eNB or eNodeB) in an LTE system, or a transmission reception point (Transmission Reception Point, TRP) or a next generation node (Generation NodeB, gNB) in a new radio (New Radio, NR) network, or the network device may be a satellite, a relay station, an unmanned aerial vehicle, an access point, an in-vehicle device, a wearable device, a network side device and a base station in a 5G network, or a network device in a future evolved public land mobile network (Public Land Mobile Network, PLMN), or a network device in a network integrating a plurality of other technologies. It should be noted that, when the solution of this embodiment of this application is applied to other systems that may appear in the future, names of the base stations and terminals may change, but this does not affect implementation of the solution of this embodiment of this application.

For example, FIG. 2 is a schematic diagram of a hardware structure of a terminal device according to an embodiment of this application. In this embodiment of this application, the terminal device may include a processor 210, an external memory interface 220, an internal memory 231, a universal serial bus (universal serial bus, USB) interface 230, an antenna 1, an antenna 2, a mobile communication module 250, a wireless communication module 260, an audio module 270, a sensor module 280, a camera 293, a display screen 294, a SIM card interface 295, and the like. The processor 210 may include a Modem 210A.

It may be understood that the structure shown in this embodiment of this application does not constitute a specific limitation on the terminal device. In some other embodiments, the terminal device may include more or fewer components than those shown in the figure, or some components may be combined, or some components may be split, or components may be arranged in different manners. Components shown in the figure may be implemented by using hardware, software, or a combination of software and hardware.

The processor 210 may include one or more processing unit, for example, the processor 210 may include an application processor (Application Processor, AP), a Modem 210A, a graphics processing unit (Graphics Processing Unit, GPU), an image signal processor (Image Signal Processor, ISP), a controller, a video codec, a digital signal processor (Digital Signal Processor, DSP), a baseband processor, a neural-network processing unit (Neural-network processing unit, NPU), and/or the like. In this embodiment of this application, the processor 210 can perform the resource allocation method provided in this embodiment of this application.

A memory may further be disposed in the processor 210 to store instructions and data.

In some embodiments, the processor 210 may include one or more interfaces. The interface may include an inter-integrated circuit (Inter-integrated Circuit, I2C) interface, an inter-integrated circuit sound (Inter-integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a USB interface, and/or the like.

The I2C interface is a bidirectional synchronous serial bus and includes a serial data line (Serial Data Line, SDA) and a serial clock line. The I2S interface may be configured for audio communication. The PCM interface may also be configured to perform audio communication, and sample, quantize, and encode an analog signal. The UART interface is a universal serial data bus configured for asynchronous communication. The MIPI interface may be configured to connect the processor 210 to a peripheral device such as the display screen 294 or the camera 293. The GPIO interface may be configured by software. The GPIO interface may be configured as a control signal or may be configured as a data signal.

The USB interface 230 is an interface that conforms to USB standards, and may be specifically a mini USB interface, a micro USB interface, a USB Type-C interface, or the like.

It may be understood that an interface connection relationship between the modules illustrated in this embodiment of this application is only an example for description and does not constitute a structural limitation on the terminal device. In some other embodiments of this application, the terminal device may alternatively use an interface connection manner different from that in the foregoing embodiment, or use a combination of a plurality of interface connection manners.

A wireless communication function of the terminal device may be implemented by the antenna 1, the antenna 2, the mobile communication module 250, the wireless communication module 260, the baseband processor, and the like.

The antenna 1 and the antenna 2 are configured to transmit or receive an electromagnetic wave signal.

The mobile communication module 250 may provide a solution to wireless communication including 2G/3G/4G/5G and the like applied to the terminal device. The mobile communication module 250 may include at least one filter, a switch, a power amplifier, a low noise amplifier (Low Noise Amplifier, LNA), and the like. In some embodiments, at least some functional modules of the mobile communication module 250 may be disposed in the processor 210. In some embodiments, at least some functional modules of the mobile communication module 250 and at least some modules of the processor 210 may be disposed in a same device.

The Modem 210A may include a modulator and a demodulator. The modulator is configured to modulate a low-frequency baseband signal to be transmitted into a medium and high-frequency signal. The demodulator is configured to demodulate a received electromagnetic wave signal into a low-frequency baseband signal. Then the demodulator transfers the low-frequency baseband signal obtained through demodulation to the baseband processor for processing. The low-frequency baseband signal is processed by the baseband processor and then transferred to the application processor. The application processor outputs a sound signal via an audio device (that is not limited to a speaker, a telephone receiver, and the like), or displays an image or a video via a display screen 294. In some embodiments, the Modem 210A may be an independent device. In some other embodiments, the Modem 210A may be independent of the processor 210, and disposed in a same component with the mobile communication module 250 or another function module.

In this embodiment of this application, the Modem 210A may dynamically adjust an LTE resource, an NR resource, and a Modem processing capability based on a data service. The Modem 210A may include at least one virtual Modem, and the at least one virtual Modem may be configured to support a data service of at least one SIM. A quantity of virtual Modems in the Modem 210A may be set when the terminal device leaves the factory.

The wireless communication module 260 may provide a solution to wireless communication applied to the terminal device, including wireless local area networks (Wireless Local Area Networks, WLAN) (for example, a Wi-Fi (Wireless Fidelity, Wi-Fi) network), Bluetooth (Bluetooth, BT), a global navigation satellite system (Global Navigation Satellite System, GNSS), a frequency modulation (Frequency Modulation, FM), near field communication (Near Field Communication, NFC), an infrared technology (Infrared, IR), and the like.

In some embodiments, the antenna 1 and the mobile communication module 250 of the terminal device are coupled, and the antenna 2 and the wireless communication module 260 are coupled, so that the terminal device can communicate with a network and another device by using a wireless communication technology. The wireless communication technology may include a global system for mobile communications (Global System For Mobile Communications, GSM), a general packet radio service (General Packet Radio Service, GPRS), code division multiple access (Code Division Multiple Access, CDMA), wideband code division multiple access (Wideband Code Division Multiple Access, WCDMA), time-division code division multiple access (Time-division Code Division Multiple Access, TD-SCDMA), long term evolution (Long Term Evolution, LTE), BT, GNSS, WLAN, NFC, FM, IR technologies, and/or the like. The GNSS may include a global positioning system (Global Positioning System, GPS), a global navigation satellite system (Global Navigation Satellite System, GLONASS), a beidou navigation satellite system (Beidou Navigation Satellite System, BDS), a quasi-zenith satellite system (Quasi-zenith Satellite System, QZSS) and/or satellite-based augmentation systems (Satellite-Based Augmentation Systems, SBAS).

The display screen 294 is configured to display an image, a video, and the like. The display screen 294 include a display panel. The display screen 294 of the terminal device may display a series of graphical user interfaces (Graphical User Interfaces, GUIs). The GUIs are all home screens of the terminal device. The terminal device may implement a photographing function by using an ISP, the camera 293, a video codec, the GPU, the display screen 294, the application processor, and the like.

The camera 293 is configured to capture a static image or a video. In some embodiments, the terminal device may include one or N cameras 293, where N is a positive integer greater than 1.

The external memory interface 220 may be configured to connect to an external memory card such as a Micro SD card, to expand a storage capacity of the terminal device.

The internal memory 231 may be configured to store computer-executable program code, and the executable program code includes instructions.

The terminal device may include the audio module 270, and the audio module 270 may include: the speaker, the receiver, a microphone, a headset jack, the application processor, and the like to implement audio functions, for example, music playing and sound recording.

The terminal device may include the sensor module 280, and the sensor module 280 may include: a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like. In this embodiment of this application, the acceleration sensor, the gyroscope sensor and the like may be configured to detect a motion status of the terminal device; and the touch sensor is configured to receive a touch operation of a user for the touch screen.

The SIM card interface 295 is configured to be connected to an SIM card. The SIM card may be inserted into the SIM card interface 295 or removed from the SIM card interface 295 to be connect to or to be removed from the terminal device. The terminal device may support one or N SIM card interfaces, where N is a positive integer greater than 1. The SIM card interface 295 may support a Nano-SIM card, a Micro-SIM card, an SIM card, and the like. A plurality of cards can be simultaneously inserted into a same SIM card interface 295. The plurality of cards may be of a same type or different types. The SIM card interface 295 may also be compatible with different types of SIM cards. The SIM card interface 295 may also be compatible with an external storage card. The terminal device may interact with the network through the SIM card, to implement functions such as call and data communication. In some embodiments, the terminal device uses an eSIM, namely, an embedded SIM card. The eSIM card may be embedded in the terminal device, and cannot be separated from the terminal device.

In addition, an operating system runs on the foregoing components, for example, an iOS operating system, an Android operating system, a Windows operating system, or the like. An application program can be installed and run on the operating system.

The following describes the technical solutions of this application and how to resolve the foregoing technical problems according to the technical solutions of this application in detail by using specific embodiments. The following several specific embodiments may be independently implemented, or may be combined with each other, and same or similar concepts or processes may not be described repeatedly in some embodiments.

In an embodiment of this application, the terminal device may allocate proper NR resources and LTE resources to a primary card and a secondary card based on situations in which a data service is processed in the primary card, a data service is processed in the secondary card, or a data service is processed in the primary card and the secondary card at the same time. For example, when the data service is processed in the primary card, the terminal device may allocate proper NR resources and LTE resources to the primary card; or when the data service is processed in the secondary card, the terminal device may allocate proper NR resources and LTE resources to the secondary card; or when the data service is processed in the secondary card and the primary card at the same time, the terminal device may dynamically allocate proper NR resources and LTE resources to both the primary card and the secondary card.

When one card of the terminal device accesses LTE, a maximum quantity of CCs supported by the card is N, and when one card of the terminal device accesses NR, a maximum quantity of CCs supported by the card is M.

When two cards of the terminal device access LTE (or NR), the primary card and the secondary card of the terminal device can both ensure a quantity of CCs that can satisfy the service, so that the quantity of CCs that can satisfy the service may be used for support calls and basic data services, and a quantity of other CCs in the LTE (or the NR) resources may be dynamically used in a Modem corresponding to the primary card, or may be used in a Modem corresponding to the secondary card. N is greater than or equal to 1, M is greater than or equal to 1, and the quantity of CCs that can satisfy the service may be 1 (or 1 CC for short).

For example, when the two cards of the terminal device access LTE, the primary card of the terminal device can at least ensure the quantity of CCs is 1, and the secondary card of the terminal device can at least ensure the quantity of CCs is 1. If a maximum quantity of CCs supported by the terminal device is N, and a quantity of other CCs that may be supported by the terminal device is N-2. It may be understood that due to a difference of a Modem architecture in the terminal device, when the terminal device accesses LTE for processing the data service, a quantity of CCs that can be dynamically used in the Modem corresponding to the primary card or the secondary card is less than N-2.

When the two cards of the terminal device access NR, the primary card of the terminal device can at least ensure the quantity of CCs is 1, and the secondary card of the terminal device can at least ensure the quantity of CCs is 1. If a maximum quantity of CCs supported by the terminal device is M, and a quantity of other CCs that may be supported by the terminal device is M-2. It may be understood that due to a difference of a Modem architecture in the terminal device, when the terminal device accesses NR for processing the data service, a quantity of CCs that can be dynamically used in the Modem corresponding to the primary card or the secondary card is less than M-2.

In an implementation, when the terminal device includes a plurality of Modems, for example, includes two Modems, the terminal device respectively allocates one CC to each Modem that accesses LTE or accesses NR. Therefore, a quantity of CCs for accessing LTE reserved by the terminal device is N-2, and a quantity of CCs for accessing NR reserved by the terminal device is M-2. Under this condition, when LTE is accessed, the quantity of CCs supported by the SIM card of the terminal device may be: 1+(N-2); and when NR is accessed, the quantity of CCs supported by the SIM card of the terminal device may be: 1+(M-2).

In another implementation, when the terminal device includes a plurality of Modems, for example, includes three Modems, the terminal device allocates one CC to each Modem that accesses LTE or accesses NR. Therefore, the quantity of CCs for accessing LTE reserved by the terminal device is N-3, and the quantity of CCs for accessing NR reserved by the terminal device is M-3. Under this condition, when LTE is accessed, the quantity of CCs supported by the SIM card of the terminal device may be: 1+(N-3); and when NR is accessed, the quantity of CCs supported by the SIM card of the terminal device may be: 1+(M-3).

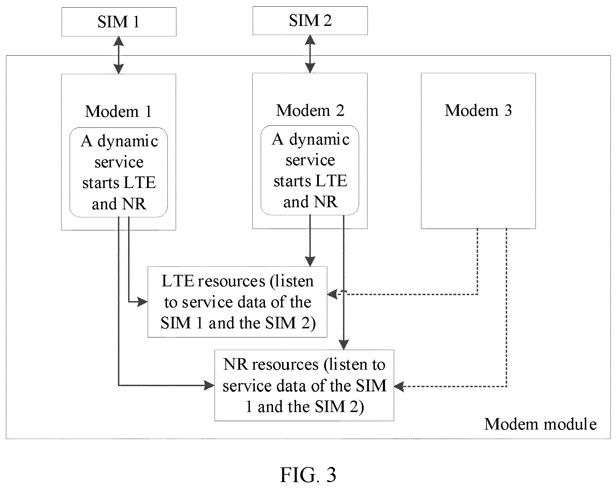

For example, FIG. 3 is a schematic diagram of a structure of a Modem according to an embodiment of this application. As shown in FIG. 3, a Modem module of the terminal device may include a plurality of Modems, for example, may include a Modem 1, a Modem 2, and a Modem 3.

As shown in FIG. 3, the terminal device includes a plurality of SIM cards, for example, a primary card SIM 1 and a secondary card SIM 2. The Modem 1 may read SIM card information in the SIM 1 through a SIM card slot, and the Modem 2 may read SIM card information in the SIM 2 through a SIM card slot. When the terminal device uses the SIM 1 and/or the SIM 2 to perform the data service, the Modem 1 and/or the Modem 2 may dynamically allocate the LTE resources and the NR resources by listening the data service of the primary card and the secondary card. In a possible implementation, the Modem 3 may also dynamically allocate the LTE resources and the NR resources by listening the data service of the primary card and the secondary card.

It may be understood that a quantity of Modems in the Modem module may be more than one. This is not limited in this embodiment of this application.

For example, Table 1 is a schematic table of LTE and NR resource allocation according to an embodiment of this application. For different service scenarios, the terminal device may refer to the following table for resource allocation of the Modem.

As shown in Table 1, the terminal device may include a plurality of Modems, for example, the terminal device may include: a Modem 1 (or M1, which may correspond to the primary card) and a Modem 2 (or M2, which may correspond to the secondary card).

In a possible implementation, the terminal device may further include a Modem 3 (or M3), and M3 may be optional. As shown in Table 1, x is greater than or equal to 0, and y is greater than or equal to 0.

**Table 1: A schematic table of LTE and NR resource allocation**

| Solution | M1 | M2 | M3 (optional) | Note |
|---|---|---|---|---|
| Solution 1 (M1 performs a data service) | 5G/4G/3G/2G | 5G/4G/3G/2G | N/A | Resources respectively reserved for LTE and NR are loaded on the M1 |
| | LTE: 1+(N-2) CCs | LTE: 1 CC | | |
| | | NR: 1 CC | | |
| | NR: 1+(m-2) CCs | | | |
| Solution 2 (M2 performs a data service) | 5G/4G/3G/2G | 5G/4G/3G/2G | N/A | Reserved resources in LTE resources and NR resources are loaded on the M2 |
| | LTE: 1 CC | LTE: 1+(N-2) CCs | | |
| | NR: 1 CC | | | |
| | | NR: 1+(m-2) CCs | | |
| Solution 3 (M1 performs a data service) | 5G/4G/3G/2G | 5G/4G/3G/2G | LTE: 1 CC | Reserved resources in LTE resources and NR resources are loaded on the M1 |
| | LTE: 1+(N-3) CCs | LTE: 1 CC | NR: 1 CC | |
| | | NR: 1 CC | | |
| | NR: 1+(m-3) CCs | | | |
| Solution 4 Both M1 and M2 perform a data service | 5G/4G/3G/2G | 5G/4G/3G/2G | N/A | If both a primary card and a secondary card support the data service, the reserved resources in the LTE resources and the NR resources are dynamically loaded based on a network status |
| | LTE: 1+x CCs | LTE: 1+(N-2-x) CCs | | |
| | NR: 1+y CCs | | | |
| | | NR: 1+(M-2-y) CCs | | |

As shown in Solution 1 in the Table 1, the terminal device includes the M1 and the M2, and the M1 performs the data service. Therefore, when the terminal device accesses LTE, a quantity of CCs supported by the M1 is: 1+(N-2), and a quantity of CCs supported by the M2 may be 1; or when the terminal device accesses NR, a quantity of CCs supported by the M1 is: 1+(M-2), and a quantity of CCs supported by the M2 may be 1. Both the M1 and the M2 can support data services of 5G, 4G, 3G, and 2G. For example, when 5G network quality is relatively poor, both the M1 and the M2 can use 4G, 3G, or 2G to perform the data service.

It may be understood that when the M1 performs the data service and the terminal device accesses LTE, the terminal device can load the resources reserved during access to LTE to the M1; or when the M1 performs the data service and the terminal device accesses NR, the terminal device can load the resources reserved during access to NR to the M1.

It may be understood that, for other solutions in the Table 1, reference may be made to descriptions of the solution 1 in the Table 1, and details are not described herein again.

It may be understood that, when the terminal device includes one SIM card, when one card of the terminal device accesses LTE, a maximum quantity of CCs supported by the card is N; and when one card of the terminal device accesses NR, a maximum quantity of CCs supported by the card is M.

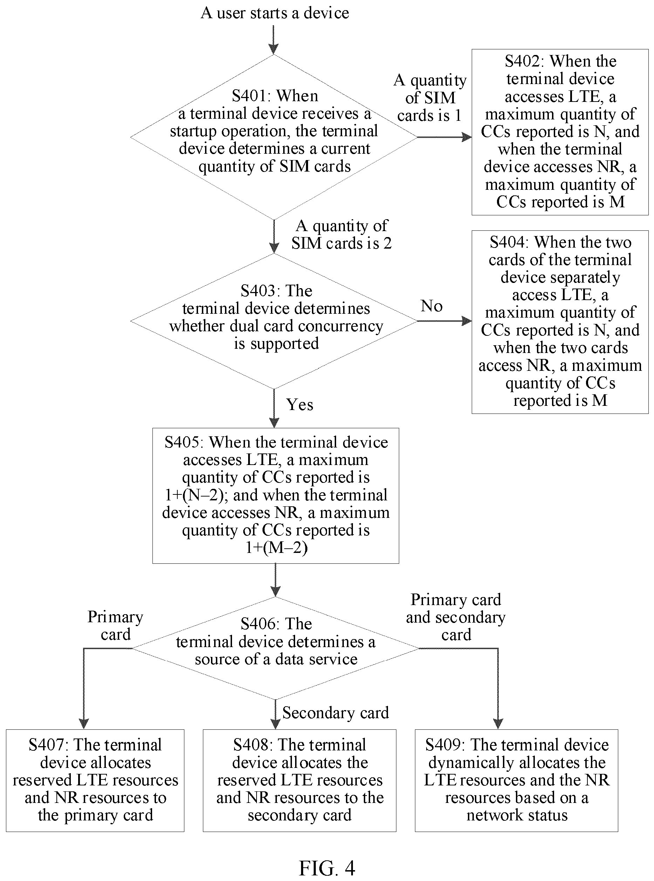

For allocation of the LTE and NR resources shown in the Table 1, for example, FIG. 4 is a schematic flowchart of a resource allocation method according to an embodiment of this application. The resources may include the LTE resources and the NR resources. In the embodiment corresponding to FIG. 4, an example in which the terminal device includes two cards, and any SIM card can correspond to one Modem is used for description, and this example does not constitute a limitation on this embodiment of this application.

In a possible implementation, the terminal device may include three SIM cards or the like, an allocation method for the LTE resources and the NR resources in the SIM card may be similar to the description in the embodiment corresponding to FIG. 4, and details are not repeated below.

As shown in FIG. 4, the resource allocation method may include the following steps.

S401: When the terminal device receives a startup operation, the terminal device determines a current quantity of SIM cards.

The startup operation may be a triggering operation for a startup button.

In a possible implementation, the terminal device determines that a trigger condition of the current quantity of SIM cards may include: a triggering operation, a voice operation, a gesture operation, or the like for restarting a control of the terminal device; or a triggering operation for a control for turning off an airplane mode when the terminal device is in the airplane mode. This is not limited in this embodiment of this application.

For example, when the terminal device receives a triggering operation of the user for the startup button, the terminal device is started, and determines the current quantity of SIM cards by the Modem, for example, the quantity of SIMs is 1, 2, or the like.

When the terminal device determines that the current quantity of SIM cards is 1, the terminal device may perform a step shown in S402; or when the terminal device determines that the current quantity of SIM cards is 2, the terminal device may perform a step shown in S403.

S402: When the terminal device accesses LTE, a maximum quantity of CCs reported is N, and when the terminal device accesses NR, a maximum quantity of CCs reported is M.

For example, the Modem in the terminal device may report the maximum quantity of CCs when accessing LTE or NR to the network device based on signaling supported in the 3rd Generation Partnership Project (3rd Generation Partnership Project, 3GPP) protocol.

In a possible implementation, the terminal device may report an LTE capability of the terminal device based on signaling related in 36.331 in the 3GPP, and report an NR capability of the terminal device based on signaling related in 38.331 in the 3GPP. This is not limited in this embodiment of this application.

Specifically, an example in which the terminal device reports the NR capability is used for description, and this example does not constitute a limitation on this embodiment of this application. For example, the terminal device may report the NR capability and other capabilities related to a UE by a UE capability (UE Capability). The UE Capability may include: UE capability enquiry (UE Capability Enquiry) and UE capability information (UE Capability Information).

An information unit of the UE capability information may include one or more of the following fields: a band list (Band List), a feature set combination (Feature Set Combination), a carrier aggregation-parameter EUTRA (CA-Parameters EUTRA), a carrier aggregation-parameter new radio (CA-Parameters NR), multi-RAT connectivity-parameters (Multi Rat Dual Connectivity-Parameters, Mrdc-Parameters), supported bandwidth combination set (Supported Bandwidth Combination Set), power class v1530 (PowerClass-v1530), and the like. In addition, the CA-Parameters EUTRA, CA-Parameters NR, MRDC-Parameters, Supported Bandwidth Combination Set, and Power Class-v1530 may be optional.

S403: The terminal device determines whether dual card concurrency is supported.

In this embodiment of this application, a dual card concurrent capability of the terminal device may be factory pre-set for the terminal device, or whether the dual card concurrent capability is supported may be set by the user in the terminal device.

In an implementation, the terminal device may be set with an identifier for indicating whether the device supports the dual card concurrency. For example, when the terminal device performs the dual card concurrent detection, the terminal device can determine whether the terminal device supports the dual card concurrency based on the identifier. When the terminal device determines that the identifier is 1, the terminal device can determine that the device supports the dual card concurrency; or when the terminal device determines that the identifier is 0, the terminal device can determine that the device does not support the dual card concurrency.

It may be understood that a specific norm or the identifier that indicating whether the device supports the dual card concurrency is not limited in this embodiment of this application.

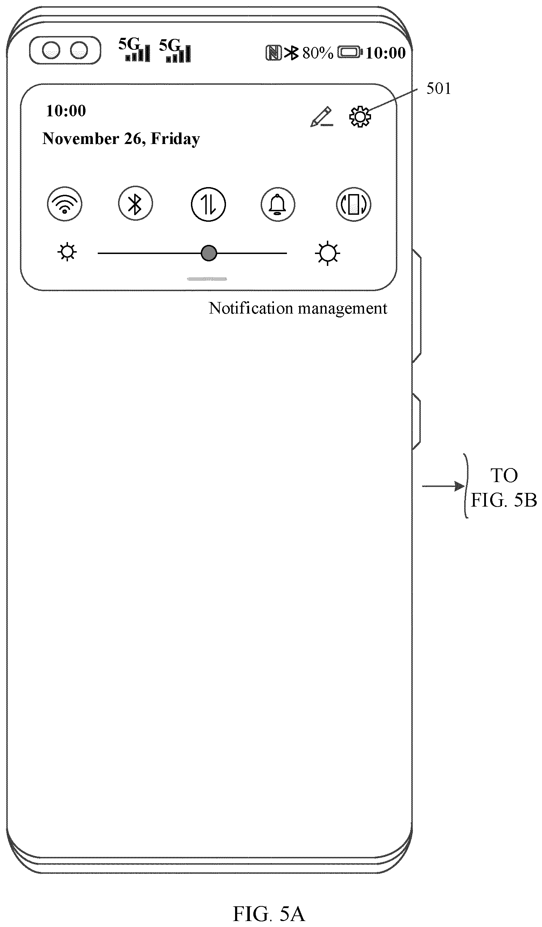

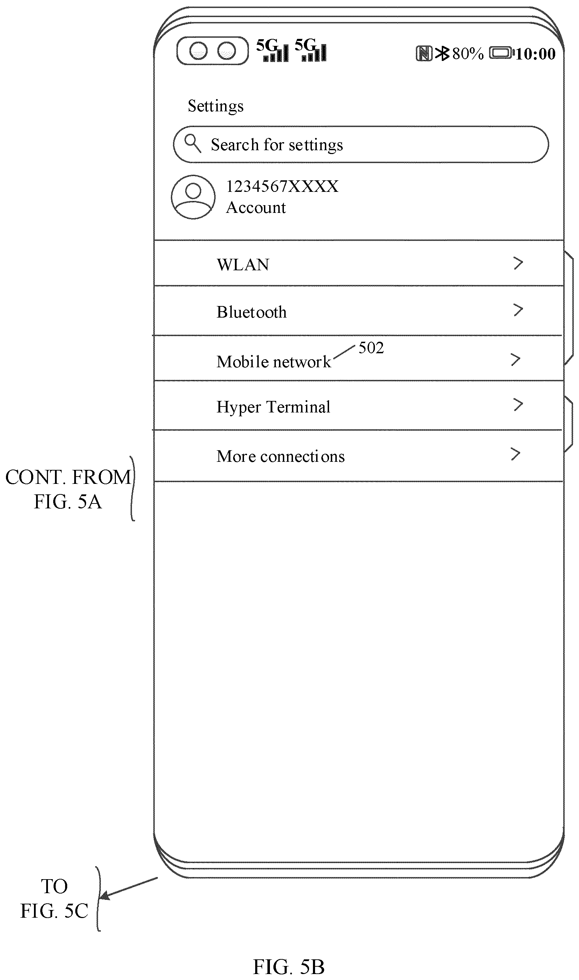

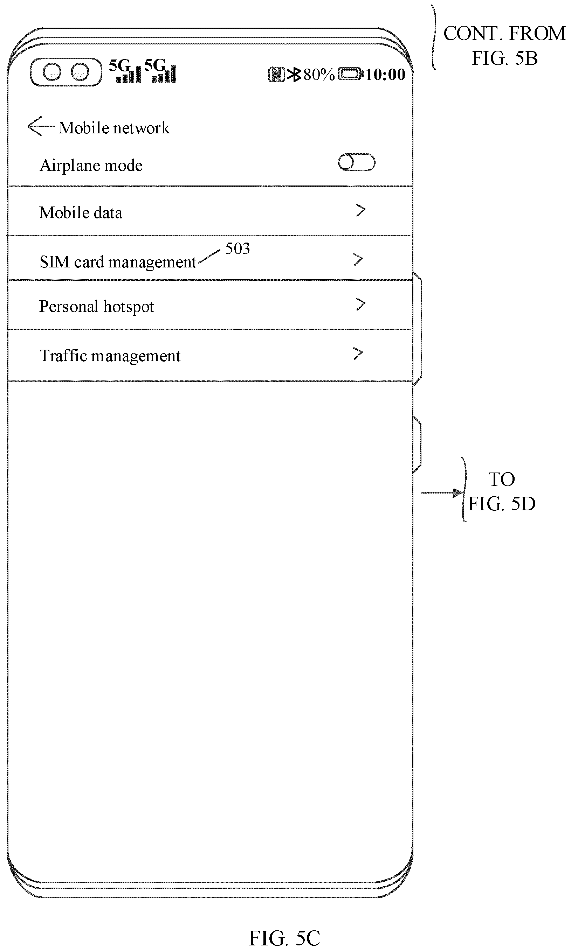

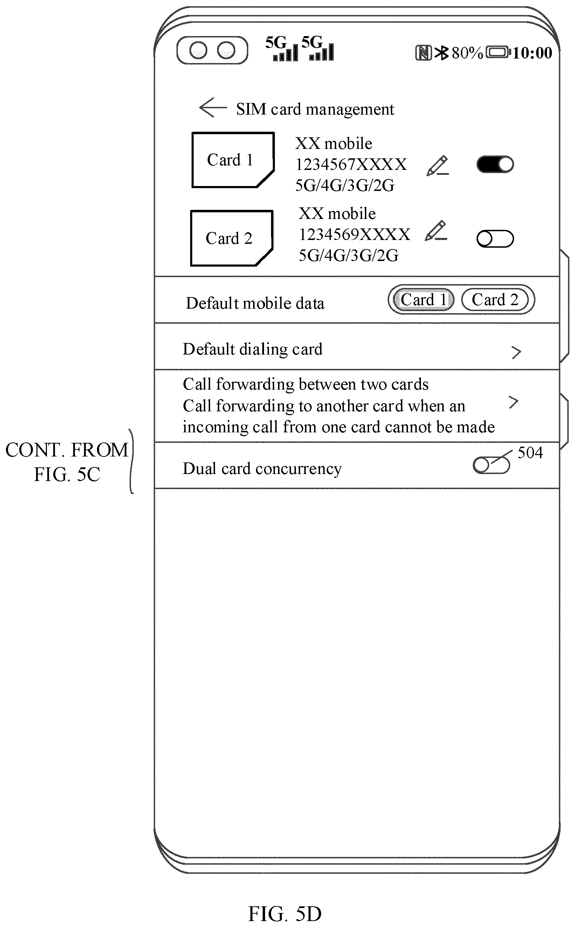

In another implementation, while the terminal device has dual card concurrent capability, the terminal device may also support settings of turning on or off the dual card concurrent capability by the user. For example, FIG. 5A, FIG. 5B, FIG. 5C, and FIG. 5D are a schematic diagram of an interface of turning on dual card concurrency according to an embodiment of this application. In the embodiment corresponding to FIG. 5A, FIG. 5B, FIG. 5C, and FIG. 5D, an example in which the terminal device is a mobile phone is used for description, and this example does not constitute a limitation on this embodiment of this application.

When the terminal device receives an operation in which the user swipes down along an upper edge of a display screen of the terminal device, the terminal device may display an interface as shown in FIG. 5A, and the interface may display: time information, a control for indicating that a WLAN function is turned on or off, a control for indicating that a Bluetooth function is turned on or off, a control for indicating that a mobile data function is turned on or off, a control for indicating that a ringing function is turned on or off, a control for indicating that an auto-rotate function is turned on or off, the control 501 configured to turn on a settings function, and the like.

In the interface shown in FIG. 5B, when the terminal device receives an operation of the user for the control 501 configured to turn on the settings function, the terminal device may display an interface as shown in FIG. 5B. As shown in FIG. 5B, the interface may display a function control corresponding to the settings function, for example: a text box for searching for settings items, a control for logging in to an account, a control for setting a WLAN, a control for setting Bluetooth, a control for setting a mobile network 502, a control for setting a Hyper Terminal, and a control for setting more connections, and the like. The account that logs in may be 1234567XXXX.

In a possible implementation, the terminal device may alternatively access the control corresponding to the settings function as shown in FIG. 5B based on triggering of the user in another interface for turning on the control for opening the settings function. For example, the user may alternatively open a settings interface by triggering the control corresponding to the settings function in a desktop state of the terminal device. This is not limited in this embodiment of this application.

In the interface shown in FIG. 5B, when the terminal device receives an operation of the user for the control 502 configured to set the mobile network, the terminal device may display an interface shown in FIG. 5C. As shown in FIG. 5C, the interface may display a function control corresponding to the mobile network, for example: a control for turning on the airplane mode, a control for setting mobile data, a control 503 for managing SIM cards, a control for setting a personal hotspot, a control for managing traffic, and the like.

In the interface shown in FIG. 5C, when the terminal device receives an operation of the user for the control 503 for managing the SIM cards, the terminal device may display the interface as shown in FIG. 5A. As shown in FIG. 5D, the interface may display: a card 1 in an inserted state, a card 2 in an inserted state, a control for setting default mobile data, a control for setting a default dialing card, a control for setting call forwarding between the two cards, a control 504 for turning on the dual card concurrent capability, and the like. The card 1 may correspond to a phone number 1234567XXXX, and the card 1 may provide the terminal device with a 5G/4G/3G/2G network under the XX mobile vendor; the card 2 may correspond to a phone number 1234569XXXX, and the card 1 may provide the terminal device with a 5G/4G/3G/2G network under the XX mobile vendor; and the default mobile data may correspond to the card 1 or the card 2.

In the interface shown in FIG. 5C, when the terminal device receives an operation of the user for the control 504 for turning on the dual card concurrent capability, the terminal device may perform a step shown in S405. The operation for the control may be a tap operation, a touch operation, a press operation, or the like for the control. This is not limited in this embodiment of this application.

It may be understood that when the terminal device determines that the device does not support the dual card concurrency, the terminal device may perform a step shown in S404; or when the terminal device determines that the device supports the dual card concurrency, the terminal device may perform a step shown in S405.

S404: When the two cards of the terminal device separately access LTE, a maximum quantity of CCs reported is N, and when the two cards access NR, a maximum quantity of CCs reported is M.

It may be understood that because the terminal device does not support the dual card concurrency, the terminal device can only support one SIM in performing a data service once. Therefore, the terminal device can separately report the maximum quantity of CCs when accessing LTE or NR for the two cards, so that the SIM card that uses the data service can maximize resource utilization.

S405: When the two cards of the terminal device separately access LTE, a maximum quantity of CCs reported is 1+(N-2), when the two cards access NR, and a maximum quantity of CCs reported is 1+(M-2).

It may be understood that when two cards of the terminal device access LTE (or NR), the primary card and the secondary card of the terminal device can both ensure a quantity of CCs that can satisfy services, and a quantity of other CCs in the LTE (or the NR) resources may be dynamically used in a Modem corresponding to the primary card, or may be used in a Modem corresponding to the secondary card.

For example, when the terminal device accesses LTE, the maximum quantity of CCs that both the cards of the terminal device can report may be: 1+(N-2); and when the terminal device accesses NR, the maximum quantity of CCs that both the cards of the terminal device can report may be: 1+(M-2).

It may be understood that, affected by a Modem architecture, due to a difference of a Modem architecture in the terminal device, when the terminal device accesses LTE for processing the data service, a quantity of CCs that can be dynamically used in the Modem corresponding to the primary card or the secondary card is less than N-2; or when the terminal device accesses NR for processing the data service, a quantity of CCs that can be dynamically used in the Modem corresponding to the primary card or the secondary card is less than M-2.

S406: The terminal device determines a source of the data service.

In this embodiment of this application, when the terminal device determines that a condition in which the primary card has the data service is met, the terminal device can perform a step shown in S407; or when the terminal device determines that a condition in which the secondary card has the data service, the terminal device can perform a step shown in S408; or when the terminal device determines that a condition in which both the primary card and the secondary card have the data service, the terminal device can perform a step shown in S409.

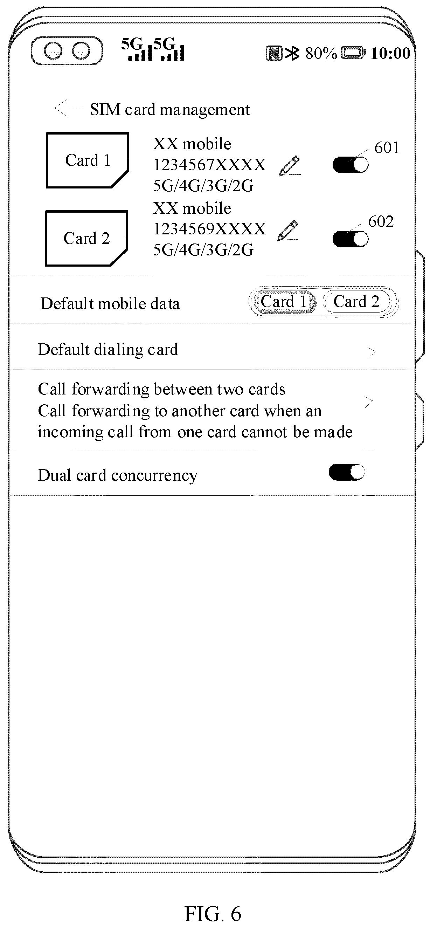

For example, the terminal device can determine whether the terminal device satisfies the primary card based on a turning-on (or turning-off) state of the user for the data services of the primary card and the secondary card. FIG. 6 is a schematic diagram of an interface of turning on a data service according to an embodiment of this application.

As shown in FIG. 6, when the dual card concurrent capability is turned on, when the terminal device receives only an operation of a control 601 corresponding to the card 1 turned on by the user, the terminal device can determine that the card 1 has the data service currently. In this case, the card 1 may be understood as the primary card, and the card 2 may be understood as the secondary card. Alternatively, when the terminal device receives only an operation of a control 602 corresponding to the card 2 turned on by the user, the terminal device can determine that the card 2 has the data service currently. In this case, the card 2 may be understood as the primary card, and the card 1 may be understood as the secondary card. Alternatively, when the terminal device receives operations of the control 601 corresponding to the card 1 and the control 602 corresponding to the card 2 turned on by the user, the terminal device can determine that both the card 1 and the card 2 have the data service currently.

S407: The terminal device allocates the reserved LTE resources and NR resources to the primary card.

For example, in this case, when the terminal device accesses LTE, a quantity of CCs supported by the primary card is: 1+(N-2), and a quantity of CCs supported by the secondary card may be 1; or when the terminal device accesses NR, a quantity of CCs supported by the primary card is: 1+(M-2), and a quantity of CCs supported by the secondary card may be 1.

S408: The terminal device allocates the reserved LTE resources and NR resources to the secondary card.

For example, in this case, when the terminal device accesses LTE, the quantity of CCs supported by the secondary card is: 1+(N-2), and the quantity of CCs supported by the primary card may be 1; or when the terminal device accesses NR, the quantity of CCs supported by the secondary card is: 1+(M-2), and the quantity of CCs supported by the primary card may be 1.

S409: The terminal device dynamically allocates the LTE resources and the NR resources based on a network status.

In an implementation, when both the primary card and the secondary card of the terminal device have the data service, the terminal device can dynamically load the LTE resources and the NR resources based on a network status of a position at which the terminal device is located. For example, when the terminal device determines that a network status of the primary card is currently better than a current network status of the secondary card, the terminal device may allocate most of the reserved LTE resources and NR resources to the primary card, and allocate a small part of the reserved LTE resources and NR resources to the secondary card.

In an implementation, when both the primary card and the secondary card of the terminal device have the data service, the terminal device can dynamically load the LTE resources and the NR resources based on traffic of the terminal device. For example, when the terminal device determines that traffic of the primary card is currently more than traffic of the secondary card, the terminal device can allocate most of the reserved LTE resources and NR resources to the primary card, and allocate a small part of the reserved LTE resources and NR resources to the secondary card.

In another implementation, when both the primary card and the secondary card of the terminal device include the data service, the terminal device can dynamically load the LTE resources and the NR resources based on the network status of the position at which the terminal device is located and the traffic of the terminal device. For a loading process, refer to the foregoing description, and details are not described herein again.

Based on this, the terminal device can match proper LTE resources and NR resources for the primary card and the secondary card based on a situation that the data service satisfies the primary card and the secondary card. This can maximize resource utilization when a plurality of cards concurrently process data services, and further enhance the concurrent processing capability of the terminal device significantly and improve communication efficiency.

In a possible implementation, for a terminal device with a limited Modem processing capability, for example, when the two cards of the terminal device perform concurrency, the LTE resources and the NR resources of both the primary card and the secondary card satisfy a minimum CC, and the Modem of the terminal device does not need to dynamically mount the LTE resources and the NR resources. Therefore, the Modem can classify Modem capabilities based on data services of the primary card and the secondary card.

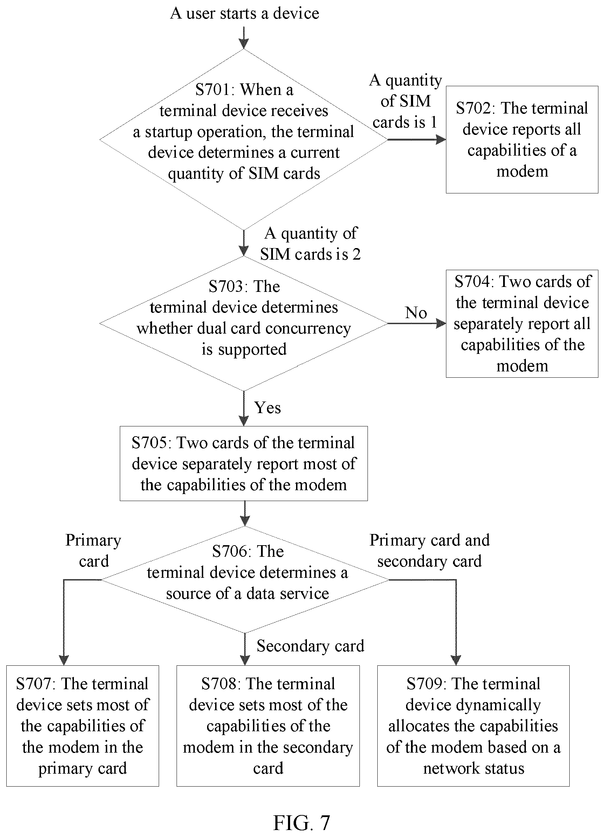

For example, FIG. 7 is a schematic flowchart of a method for allocating Modem capabilities according to an embodiment of this application. In the embodiment corresponding to FIG. 7, the Modem processing capability may include: a bandwidth capability supported by the Modem and other capabilities. An example in which the Modem processing capability is the bandwidth capability supported by the Modem is used for description in this embodiment of this application, and this example does not constitute a limitation on this embodiment of this application.

As shown in FIG. 7, the method for allocating Modem capabilities includes the following steps.

S701: When the terminal device receives a startup operation, the terminal device determines a current quantity of SIM cards.

It may be understood that, for a specific step of determining a current quantity of SIM card by the terminal device, refer to the description in the step shown in S401, and details are not described herein again.

When the terminal device determines that the current quantity of SIM cards is 1, the terminal device may perform a step shown in S702; or when the terminal device determines that the current quantity of SIM cards is 2, the terminal device may perform a step shown in S703.

S702: The terminal device reports all capabilities of the Modem.

For example, when the quantity of SIM cards is 1, and the Modem can support a bandwidth of at most 140 M, the terminal device may report the bandwidth of 140 M supported by one card, that is, all the capabilities of the Modem corresponding to the card. In this scenario, a maximum operating rate may be 2 Gbps. It may be understood that a specific value representing the Modem processing capability is only an example, and does not constitute a limitation on this embodiment of this application.

In a possible implementation, the terminal device may report the Modem capability based on the UE Capability described in the step shown in S402, and the specific fields related in the UE Capability are not described herein again.

S703: The terminal device determines whether dual card concurrency is supported.

It may be understood that, for a method for determining whether the dual card concurrency is supported by the terminal device, refer to the step shown in S403, and details are not described herein again.

When the terminal device determines that the device does not support the dual card concurrency, the terminal device can perform a step shown in S704; or when the terminal device determines that the device supports the dual card concurrency, the terminal device may perform a step shown in S705.

S704: The two cards of the terminal device separately report all the capabilities of the Modem.

S705: The two cards of the terminal device separately report most of the capabilities of the Modem.

For example, when the quantity of SIM cards is 2, and the Modem can support a bandwidth of at most 140 M, the two cards of the terminal device separately report a maximum capability that the two cards of the Modem can support, for example, most of capabilities of the Modem, for example, the two cards separately report a bandwidth of 100 M. It may be understood that a specific value representing the Modem processing capability is only an example, and does not constitute a limitation on this embodiment of this application.

S706: The terminal device determines a source of the data service.

It may be understood that, for a method for determining the source of the data service by the terminal device, refer to the step shown in S406, and details are not described herein again. When the terminal device determines that the condition in which the primary card has the data service, the terminal device can perform a step shown in S707; or when the terminal device determines that a condition in which the secondary card has the data service, the terminal device can perform a step shown in S708; or when the terminal device determines that a condition in which both the primary card and the secondary card have the data service, the terminal device can perform a step shown in S709.

S707: The terminal device sets most of capabilities of the Modem in the primary card.

In an implementation, modules in the Modem such as a core (core) may be configured to provide the Modem processing capability, and any Modem may include a plurality of cores. When the terminal device determines that only the condition in which the primary card has the data service, the terminal device may set most of the Modem processing capability in the primary card, and set a small part of the Modem processing capability in the secondary card. For example, when the Modem includes four cores, the terminal device may use three cores to perform the data service of the primary card; and adaptively, the terminal device may use one core to perform the data service of the secondary card. A quantity of cores included in the Modem is not specifically limited in this embodiment of this application.

In another implementation, when a maximum benchmark result that can be supported by one card of the Modem is 15000, and the terminal device determines that only the condition in which the primary card has the data service is currently satisfied, a benchmark result of the primary card of the terminal device may be 10000, and a benchmark result of the secondary card of the terminal device may be 3000. The benchmark result may be used for indicating performance and fluency of the terminal device during operation, and a greater benchmark result indicates better performance.

In another implementation, when the Modem can support a bandwidth of at most 140 M, and the terminal device determines that only the condition in which the primary card has the data service is satisfied, the Modem corresponding to the primary card of the terminal device can use a bandwidth of 100 M, and in this case, the Modem corresponding to the secondary card of the terminal device can use a bandwidth of 20 M.

It may be understood that, affected by the Modem architecture, it is possible that a sum of capabilities of the two cards is less than a maximum capability of one card in the terminal device.

S708: The terminal device sets most of the capabilities of the Modem in the secondary card.

In an implementation, when the terminal device determines that only the condition in which the secondary card has the data service is currently satisfied, the terminal device can set most of the Modem processing capability in the secondary card, and set a small part of the Modem processing capability in the primary card. For example, when the Modem includes four cores, the terminal device can use three cores to perform the data service of the secondary card; and adaptively, the terminal device can use one core to perform the data service of the primary card.

In another implementation, when a maximum benchmark result that can be supported by one card of the Modem is 15000, and the terminal device determines that only the condition in which the secondary card has the data service is currently satisfied, a benchmark result of the secondary card of the terminal device may be 10000, and a benchmark result of the primary card of the terminal device may be 3000.

In still another implementation, when the Modem can support a bandwidth of at most 140 M, and the terminal device determines that only the condition in which the secondary card has the data service is satisfied, the Modem corresponding to the primary card of the terminal device can use a bandwidth of 100 M, and in this case, the Modem corresponding to the secondary card of the terminal device can use a bandwidth of 20 M.

S709: The terminal device dynamically allocates the capabilities of the Modem based on the network status.

In this embodiment of this application, the terminal device can dynamically load the Modem processing capability based on the network status and/or traffic of the primary card and the secondary card in the terminal device. For a specific loading process of the Modem processing capability, refer to the dynamic loading process of the LTE resources and the NR resources in the step shown in S409, and details are not described herein again.

Based on this, the terminal device can match a proper Modem capability for the primary card and the secondary card based on a situation that the data service satisfies the primary card and the secondary card. This can maximize resource utilization when a plurality of cards concurrently process data services, and further enhance the concurrent processing capability of the terminal device significantly and improve communication efficiency.

It may be understood that the interfaces described in embodiments of this application are merely examples, and shall not be construed as a limitation on embodiments of this application.

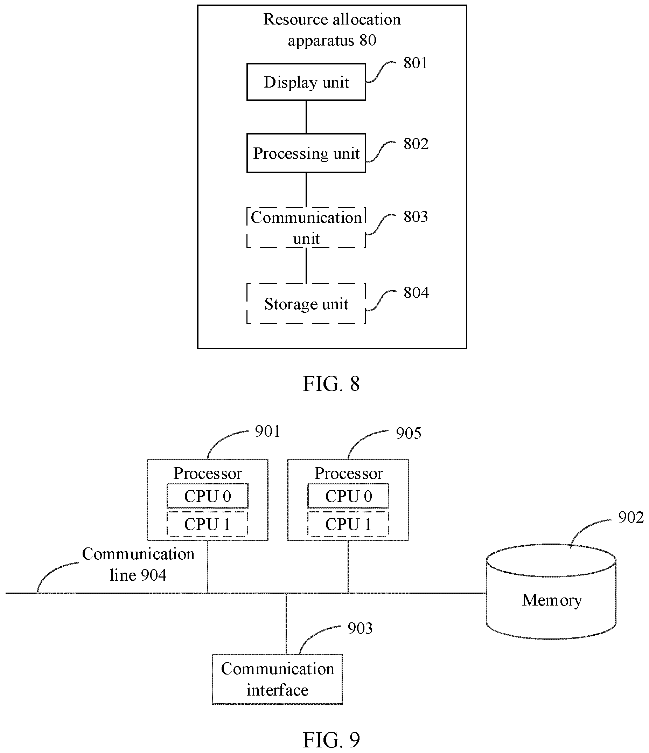

The method provided in embodiments of this application is described above with reference to FIG. 3 to FIG. 7, and an apparatus for performing the method in embodiments of this application is described below. As shown in FIG. 8, FIG. 8 is a schematic diagram of a structure of a resource allocation apparatus according to an embodiment of this application. The resource allocation apparatus may be the terminal device in embodiments of this application, or may be a chip or a chip system in the terminal device.

As shown in FIG. 8, a resource allocation apparatus 80 may be used in a communication device, a circuit, a hardware assembly, or a chip. The resource allocation apparatus includes: a display unit 801, a processing unit 802, and a communication unit 803. The display unit 801 is configured to support steps of displaying performed in a resource allocation method. The processing unit 802 is configured to support the resource allocation apparatus in performing steps of information processing. The communication unit 803 is configured to support steps of data sending and data receiving performed in the resource allocation method.

In a possible embodiment, the communication unit 803 may be an input/output interface, a pin, a circuit, or the like.

In a possible embodiment, the resource allocation apparatus may further include: a storage unit 804. The processing unit 802, the communication unit 803, and the storage unit 804 are connected through a line.

The storage unit 804 may include one or more memories. The memory may be one or more components configured to store a program or data in a device or a circuit.

The storage unit 804 may exist independently, and is connected to the processing unit 802 included in the resource allocation apparatus through a communication line. The storage unit 804 may alternatively be integrated with the processing unit 802.

The storage unit 804 may store computer-executable instructions of the method of the terminal device, so that the processing unit 802 performs the method in the foregoing embodiments.

The storage unit 804 may be a register, a cache, a RAM, or the like, and the storage unit 804 may be integrated with the processing unit 802. The storage unit 804 may be a read-only memory (read-only memory, ROM) or another type of static storage device that may store static information and instructions, and the storage unit 804 may be independent of the processing unit 802.

FIG. 9 is a schematic diagram of a hardware structure of another terminal device according to an embodiment of this application. As shown in FIG. 9, the terminal device includes a processor 901, a communication line 904, and at least one communication interface (a communication interface 903 is used as an example for description in FIG. 9).

The processor 901 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 904 may include a circuit for transmitting information between the foregoing components.

The communication interface 903 uses any apparatus of a transceiver type to communicate with another device or a communication network such as an Ethernet and a wireless local area network (wireless local area networks, WLAN).

Possibly, the terminal device may further include a memory 902.

The memory 902 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc memory, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but not limited thereto. The memory may exist independently, and is connected to the processor through the communication line 904. The memory may alternatively be integrated with the processor.

The memory 902 is configured to store computer-executable instructions for performing the solutions of this application, and the processor 901 controls execution of the computer-executable instructions. The processor 901 is configured to execute the computer-executable instructions stored in the memory 902, to implement the method provided in embodiments of this application.

Possibly, the computer-executable instructions in this embodiment of this application may also be referred to as application program code. This is not specifically limited in this embodiment of this application.

During specific implementation, in an embodiment, the processor 901 may include one or more CPUs, for example, a CPU 0 and a CPU 1 in FIG. 9.

During specific implementation, in an embodiment, the terminal device may include a plurality of processors, for example, the processor 901 and a processor 905 in FIG. 9. Each of these processors may be a single-core (single-CPU) processor, or may be a multi-core (multi-CPU) processor. The processor herein may refer to one or more devices, circuits, and/or processing cores configured to process data (for example, computer program instructions).

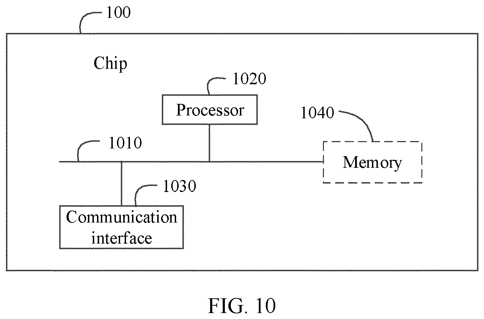

For example, FIG. 10 is a schematic diagram of a structure of a chip according to an embodiment of this application. The chip 100 includes one or more than two (including two) processors 1020 and communication interfaces 1030.

In some implementations, the memory 1040 stores the following elements: an executable module or a data structure, or subsets thereof, or extended sets thereof.

In this embodiment of this application, the memory 1040 may include a read-only memory and a random access memory, and provide instructions and data for the processor 1020. A part of the memory 1040 may further include a non-volatile random access memory (non-volatile random access memory, NVRAM).

In this embodiment of this application, the memory 1040, the communication interface 1030, and the memory 1040 are coupled through a bus system 1010. The bus system 1010 may further include a power bus, a control bus, and a status signal bus in addition to a data bus. For convenience of description, various buses are marked as the bus system 1010 in FIG. 10.

The foregoing method described in embodiments of this application may be applied to the processor 1020, or implemented by the processor 1020. The processor 1020 may be an integrated circuit chip and has a signal processing capability. In an implementation process, the steps of the foregoing method may be completed by using a hardware-integrated logic circuit in the processor 1020 or instructions in a form of software. The above processor 1020 may be a general purpose processor, (for example, a microprocessor or a conventional processor), a digital signal processor (digital signal processing, DSP), an application specific integrated circuit (application specific integrated circuit, ASIC), a field-programmable gate array (field-programmable gate array, FPGA), another programmable logic device, a discrete gate, a transistor logic device, or a discrete hardware component. The processor 1020 may implement or perform the methods, steps, and logical block diagrams disclosed in embodiments of the present invention.

The steps of the method disclosed in embodiments of this application may be directly performed by a hardware decoding processor or performed by a combination of hardware and software modules in a decoding processor. The software module may be located in a mature storage medium in the art, such as a random access memory, a read-only memory, a programmable read-only memory, or an electrically erasable programmable read-only memory (electrically erasable programmable read only memory, EEPROM). The storage medium is located in the memory 1040, and the processor 1020 reads information in the memory 1040, and completes the steps of the foregoing method in combination with hardware of the processor.

In the foregoing embodiment, the instructions stored in the memory and executed by the processor may be implemented in a form of a computer program product. The computer program product may be pre-written in the memory, or may be downloaded and installed in the memory in a form of software.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave) manner. The computer-readable storage medium may be any available medium accessible by a computer, or a data storage device, for example, a server or a data center, integrating one or more available media. For example, the available medium may include a magnetic medium (for example, a floppy disk, a hard disk, or a magnetic tape), an optical medium (for example, a digital versatile disc (digital versatile disc, DVD)), a semi-conductive medium (for example, a solid state disk (solid state disk, SSD)), or the like.

An embodiment of this application further provides a computer-readable storage medium. All or some of the methods described in the foregoing embodiments may be implemented by software, hardware, firmware, or any combination thereof. The computer-readable medium may include a computer storage medium and a communication medium, and may further include any medium that can transfer a computer program from one place to another. The storage medium may be any target medium accessible to a computer.

In a possible design, the computer-readable medium may include a compact disc read-only memory (compact disc read-only memory, CD-ROM), a RAM, a ROM, an EEPROM, or another compact disc memory. The computer-readable medium may include a magnetic disk memory or another magnetic disk storage device. In addition, any connection line may also be appropriately referred to as a computer-readable medium. For example, if software is transmitted from a website, a server, or another remote source by using a coaxial cable, an optical fiber cable, a twisted pair, a DSL, or a wireless technology (such as infrared, radio, or microwave), the coaxial cable, the optical fiber cable, the twisted pair, the DSL, or the wireless technology such as infrared, radio, or microwave is included in a definition of a medium. A magnetic disk and an optical disc used herein include an optical disc (CD), a laser disc, an optical disc, a digital versatile disc (digital versatile disc, DVD), a floppy disk, and a blue ray disc, where the magnetic disk generally reproduces data in a magnetic manner, and the optical disc reproduces data optically by using laser.

## Claims

1. A resource allocation method, applied to a terminal device, wherein the method comprises:
receiving a first operation for the terminal device;
reporting, by the terminal device in response to the first operation, available communication resources to a network device based on at least a quantity of communication cards and a network standard of a network accessed by the communication card; and
determining, by the terminal device, a target communication card performing a data service, and allocating communication resources to the target communication card,
wherein the available communication resources comprise: a first resource used for supporting a long term evolution LTE service, a second resource used for supporting a new radio NR service, and a modem processing capability,
wherein the first operation comprises one or more of the following: an operation used for starting the terminal device, an operation used for restarting the terminal device, or an operation used for exiting an airplane mode of the terminal device.

2. The method according to claim 1, wherein the first resource comprises a first component carrier CC, the second resource comprises a second CC, and the reporting, by the terminal device, available communication resources to a network device based on at least a quantity of communication cards and a network standard of a network accessed by the communication card comprises:
reporting, by the terminal device when the target communication card is a first communication card and the terminal device determines to access an LTE network, N first CCs to the network device for the first communication card, wherein N is a positive integer; or
reporting, by the terminal device, M second CCs to the network device for the first communication card when the target communication card is the first communication card and the terminal device determines to access an NR network, wherein M is a positive integer.

3. The method according to claim 2, wherein the reporting, by the terminal device, available communication resources to a network device based on at least a quantity of communication cards and a network standard of a network accessed by the communication card comprises:
reporting, by the terminal device, the available communication resources to the network device based on the quantity of communication cards, the network standard of the network accessed by the communication card, and a dual card concurrent state of the terminal device.

4. The method according to claim 3, wherein the reporting, by the terminal device, the available communication resources to the network device based on the quantity of communication cards, the network standard of the network accessed by the communication card, and a dual card concurrent state of the terminal device comprises:
respectively reporting, by the terminal device when the target communication card comprises the first communication card and a second communication card, the terminal device accesses the LTE network, and the terminal device is not in the dual card concurrent state, N first CCs to the network device for the first communication card and the second communication card; or
respectively reporting, by the terminal device, M second CCs to the network device for the first communication card and the second communication card when the target communication card comprises the first communication card and the second communication card, the terminal device accesses the NR network, and the terminal device is not in the dual card concurrent state.

5. The method according to claim 3, wherein the reporting, by the terminal device, the available communication resources to the network device based on the quantity of communication cards, the network standard of the network accessed by the communication card, and a dual card concurrent state of the terminal device comprises:
respectively reporting, by the terminal device, N-1 first CCs to the network device for the first communication card and a second communication card when the target communication card comprises the first communication card and the second communication card, the terminal device accesses the LTE network, and the terminal device is in the dual card concurrent state; or
respectively reporting, by the terminal device, M-1 second CCs to the network device for the first communication card and the second communication card when the target communication card comprises the first communication card and the second communication card, the terminal device accesses the NR network, and the terminal device is in the dual card concurrent state.

6. The method according to claim 5, wherein the determining, by the terminal device, a target communication card for performing a data service, and allocating communication resources to the target communication card, comprises:
allocating, by the terminal device when the terminal device determines that the data service is from the first communication card, and the terminal device accesses the LTE network, at most N-1 first CCs to the first communication card, and allocating one first CC to the second communication card; or
allocating, by the terminal device when the terminal device determines that the data service is from the first communication card, and the terminal device accesses the NR network, at most M-1 second CCs to the first communication card, and allocating one second CC to the second communication card.

7. The method according to claim 5, wherein the determining, by the terminal device, a target communication card for performing a data service, and allocating communication resources to the target communication card, comprises:
allocating, by the terminal device when the terminal device determines that the data service is from the second communication card, and the terminal device accesses the LTE network, at most N-1 first CCs to the second communication card, and allocating one first CC to the first communication card; or
allocating, by the terminal device when the terminal device determines that the data service is from the second communication card, and the terminal device accesses the NR network, at most M-1 second CCs to the second communication card, and allocating one second CC to the first communication card.

8. The method according to claim 5, wherein the determining, by the terminal device, a target communication card for performing a data service, and allocating communication resources to the target communication card, comprises:
allocating, by the terminal device, communication resources to the first communication card and the second communication card based on network quality of the first communication card, network quality of the second communication card, traffic data of the first communication card, and traffic data of the second communication card when the terminal device determines that the data service is from the first communication card and the second communication card.

9. The method according to claim 8, wherein the network quality is directly proportional to and positively correlated with the communication resources; and the traffic data is positively correlated with the communication resources.

10. A communication apparatus, wherein the communication apparatus comprises a processor (901) and a memory (902), wherein
the memory is configured to store program instructions; and
the processor is configured to read the program instructions stored in the memory to cause the communication apparatus to perform the method according to any one of claims 1 to 9.

11. A computer-readable storage medium, wherein the computer-readable storage medium stores a computer program which, when executed by a processor, causes the processor to perform the method according to any one of claims 1 to 9.

12. A chip system (100), which is applied to communication apparatus, comprising one or more processors (1020); wherein the one or more processors is configured to execute computer instructions to cause the communication apparatus to perform the method according to any one of claims 1 to 9.

## Patentansprüche

1. Ressourcenallokationsverfahren, angewendet auf ein Endgerät, wobei das Verfahren umfasst:
Empfangen einer ersten Operation für das Endgerät;
Melden, durch das Endgerät in Reaktion auf die erste Operation, verfügbarer Kommunikationsressourcen an eine Netzwerkvorrichtung basierend auf zumindest einer Anzahl von Kommunikationskarten und einem Netzwerkstandard eines Netzwerks, auf das die Kommunikationskarte zugreift; und
Bestimmen, durch das Endgerät, einer Ziel-Kommunikationskarte, die einen Datendienst ausführt, und Zuweisen von Kommunikationsressourcen an die Ziel-Kommunikationskarte,
wobei die verfügbaren Kommunikationsressourcen umfassen: eine erste Ressource, die zur Unterstützung eines Long-Term-Evolution-LTE-Dienstes verwendet wird, eine zweite Ressource, die zur Unterstützung eines New-Radio-NR-Dienstes verwendet wird, und eine Modem-Verarbeitungskapazität,
wobei die erste Operation eine oder mehrere der folgenden umfasst: eine Operation zum Starten des Endgeräts, eine Operation zum Neustarten des Endgeräts oder eine Operation zum Beenden eines Flugmodus des Endgeräts.

2. Verfahren nach Anspruch 1, wobei die erste Ressource einen ersten Komponententräger CC umfasst, die zweite Ressource einen zweiten CC umfasst, und das Melden, durch das Endgerät, verfügbarer Kommunikationsressourcen an eine Netzwerkvorrichtung basierend auf zumindest einer Anzahl von Kommunikationskarten und einem Netzwerkstandard eines Netzwerks, auf das die Kommunikationskarte zugreift, umfasst:
Melden, durch das Endgerät, wenn die Ziel-Kommunikationskarte eine erste Kommunikationskarte ist und das Endgerät bestimmt, auf ein LTE-Netzwerk zuzugreifen, von N ersten CCs an die Netzwerkvorrichtung für die erste Kommunikationskarte, wobei N eine positive ganze Zahl ist; oder
Melden, durch das Endgerät, von M zweiten CCs an die Netzwerkvorrichtung für die erste Kommunikationskarte, wenn die Ziel-Kommunikationskarte die erste Kommunikationskarte ist und das Endgerät bestimmt, auf ein NR-Netzwerk zuzugreifen, wobei M eine positive ganze Zahl ist.

3. Verfahren nach Anspruch 2, wobei das Melden, durch das Endgerät, verfügbarer Kommunikationsressourcen an eine Netzwerkvorrichtung basierend auf zumindest einer Anzahl von Kommunikationskarten und einem Netzwerkstandard eines Netzwerks, auf das die Kommunikationskarte zugreift, umfasst:
Melden, durch das Endgerät, der verfügbaren Kommunikationsressourcen an die Netzwerkvorrichtung basierend auf der Anzahl von Kommunikationskarten, dem Netzwerkstandard des Netzwerks, auf das die Kommunikationskarte zugreift, und einem Dual-Karten-Parallelzustand des Endgeräts.

4. Verfahren nach Anspruch 3, wobei das Melden der verfügbaren Kommunikationsressourcen durch das Endgerät an die Netzwerkvorrichtung basierend auf der Anzahl der Kommunikationskarten, dem Netzwerkstandard des von der Kommunikationskarte genutzten Netzwerks und einem Dual-Karten-Parallelzustand des Endgeräts Folgendes umfasst:
das jeweilige Melden von N ersten CCs durch das Endgerät an die Netzwerkvorrichtung für die erste Kommunikationskarte und die zweite Kommunikationskarte, wenn die Zielkommunikationskarte die erste Kommunikationskarte und eine zweite Kommunikationskarte umfasst, das Endgerät auf das LTE-Netzwerk zugreift und sich das Endgerät nicht im Dual-Karten-Parallelzustand befindet; oder
das jeweilige Melden von M zweiten CCs durch das Endgerät an die Netzwerkvorrichtung für die erste Kommunikationskarte und die zweite Kommunikationskarte, wenn die Zielkommunikationskarte die erste Kommunikationskarte und die zweite Kommunikationskarte umfasst, das Endgerät auf das NR-Netzwerk zugreift und sich das Endgerät nicht im Dual-Karten-Parallelzustand befindet.

5. Verfahren nach Anspruch 3, wobei das Melden der verfügbaren Kommunikationsressourcen durch das Endgerät an die Netzwerkvorrichtung basierend auf der Anzahl der Kommunikationskarten, dem Netzwerkstandard des von der Kommunikationskarte genutzten Netzwerks und einem Dual-Karten-Parallelzustand des Endgeräts Folgendes umfasst:
das jeweilige Melden von N-1 ersten CCs durch das Endgerät an die Netzwerkvorrichtung für die erste Kommunikationskarte und eine zweite Kommunikationskarte, wenn die Zielkommunikationskarte die erste Kommunikationskarte und die zweite Kommunikationskarte umfasst, das Endgerät auf das LTE-Netzwerk zugreift und sich das Endgerät im Dual-Karten-Parallelzustand befindet; oder
das jeweilige Melden von M-1 zweiten CCs durch das Endgerät an die Netzwerkvorrichtung für die erste Kommunikationskarte und die zweite Kommunikationskarte, wenn die Zielkommunikationskarte die erste Kommunikationskarte und die zweite Kommunikationskarte umfasst, das Endgerät auf das NR-Netzwerk zugreift und sich das Endgerät im Dual-Karten-Parallelzustand befindet.

6. Verfahren nach Anspruch 5, wobei das Bestimmen einer Zielkommunikationskarte zum Durchführen eines Datendienstes durch das Endgerät und das Zuweisen von Kommunikationsressourcen an die Zielkommunikationskarte Folgendes umfasst:
das Zuweisen von höchstens N-1 ersten CCs an die erste Kommunikationskarte durch das Endgerät und das Zuweisen eines ersten CC an die zweite Kommunikationskarte, wenn das Endgerät bestimmt, dass der Datendienst von der ersten Kommunikationskarte stammt und das Endgerät auf das LTE-Netzwerk zugreift; oder
Zuweisen von höchstens M-1 zweiten CCs an die erste Kommunikationskarte und Zuweisen einer zweiten CC an die zweite Kommunikationskarte durch das Endgerät, wenn das Endgerät bestimmt, dass der Datendienst von der ersten Kommunikationskarte stammt und das Endgerät auf das NR-Netz zugreift.

7. Verfahren nach Anspruch 5, wobei das Bestimmen einer Zielkommunikationskarte zur Durchführung eines Datendienstes durch das Endgerät und das Zuweisen von Kommunikationsressourcen an die Zielkommunikationskarte Folgendes umfasst:
Zuweisen von höchstens N-1 ersten CCs an die zweite Kommunikationskarte und Zuweisen einer ersten CC an die erste Kommunikationskarte durch das Endgerät, wenn das Endgerät bestimmt, dass der Datendienst von der zweiten Kommunikationskarte stammt und das Endgerät auf das LTE-Netz zugreift; oder
Zuweisen von höchstens M-1 zweiten CCs an die zweite Kommunikationskarte und Zuweisen einer zweiten CC an die erste Kommunikationskarte durch das Endgerät, wenn das Endgerät bestimmt, dass der Datendienst von der zweiten Kommunikationskarte stammt und das Endgerät auf das NR-Netz zugreift.

8. Verfahren nach Anspruch 5, wobei das Bestimmen einer Zielkommunikationskarte zur Durchführung eines Datendienstes durch das Endgerät und das Zuweisen von Kommunikationsressourcen an die Zielkommunikationskarte Folgendes umfasst:
Zuweisen von Kommunikationsressourcen an die erste Kommunikationskarte und die zweite Kommunikationskarte durch das Endgerät basierend auf der Netzqualität der ersten Kommunikationskarte, der Netzqualität der zweiten Kommunikationskarte, Verkehrsdaten der ersten Kommunikationskarte und Verkehrsdaten der zweiten Kommunikationskarte, wenn das Endgerät bestimmt, dass der Datendienst von der ersten Kommunikationskarte und der zweiten Kommunikationskarte stammt.

9. Verfahren nach Anspruch 8, wobei die Netzqualität direkt proportional zu den Kommunikationsressourcen ist und positiv mit diesen korreliert; und die Verkehrsdaten positiv mit den Kommunikationsressourcen korreliert sind.

10. Kommunikationsvorrichtung, wobei die Kommunikationsvorrichtung einen Prozessor (901) und einen Speicher (902) umfasst, wobei
der Speicher dazu konfiguriert ist, Programmbefehle zu speichern; und
der Prozessor dazu konfiguriert ist, die im Speicher gespeicherten Programmbefehle zu lesen, um die Kommunikationsvorrichtung zu veranlassen, das Verfahren nach einem der Ansprüche 1 bis 9 durchzuführen.

11. Computerlesbares Speichermedium, wobei das computerlesbare Speichermedium ein Computerprogramm speichert, das, wenn es von einem Prozessor ausgeführt wird, den Prozessor veranlasst, das Verfahren nach einem der Ansprüche 1 bis 9 durchzuführen.

12. Ein Chip-System (100), das in Kommunikationsgeräten angewendet wird, umfassend einen oder mehrere Prozessoren (1020); wobei der eine oder die mehreren Prozessoren dazu konfiguriert sind, Computereinweisungen auszuführen, um das Kommunikationsgerät dazu zu veranlassen, das Verfahren nach einem der Ansprüche 1 bis 9 durchzuführen.

## Revendications

1. Procédé d'allocation de ressources, appliqué à un terminal, le procédé comprenant :
la réception d'une première opération pour le terminal ;
le rapport, par le terminal en réponse à la première opération, de ressources de communication disponibles à un dispositif de réseau sur la base d'au moins un nombre de cartes de communication et d'une norme de réseau d'un réseau accédé par la carte de communication ; et
la détermination, par le terminal, d'une carte de communication cible effectuant un service de données, et l'allocation de ressources de communication à la carte de communication cible,
dans lequel les ressources de communication disponibles comprennent : une première ressource utilisée pour prendre en charge un service d'évolution à long terme LTE, une deuxième ressource utilisée pour prendre en charge un service de nouvelle radio NR, et une capacité de traitement de modem,
dans lequel la première opération comprend une ou plusieurs des opérations suivantes : une opération utilisée pour démarrer le terminal, une opération utilisée pour redémarrer le terminal, ou une opération utilisée pour quitter un mode avion du terminal.

2. Procédé selon la revendication 1, dans lequel la première ressource comprend une première porteuse composante CC, la deuxième ressource comprend une deuxième CC, et le rapport, par le terminal, de ressources de communication disponibles à un dispositif de réseau sur la base d'au moins un nombre de cartes de communication et d'une norme de réseau d'un réseau accédé par la carte de communication comprend :
le rapport, par le terminal lorsque la carte de communication cible est une première carte de communication et que le terminal détermine d'accéder à un réseau LTE, de N premières CC au dispositif de réseau pour la première carte de communication, où N est un entier positif ; ou
le rapport, par le terminal, de M deuxièmes CC au dispositif de réseau pour la première carte de communication lorsque la carte de communication cible est la première carte de communication et que le terminal détermine d'accéder à un réseau NR, où M est un entier positif.

3. Procédé selon la revendication 2, dans lequel le rapport, par le terminal, de ressources de communication disponibles à un dispositif de réseau sur la base d'au moins un nombre de cartes de communication et d'une norme de réseau d'un réseau accédé par la carte de communication comprend :
le rapport, par le terminal, des ressources de communication disponibles au dispositif de réseau sur la base du nombre de cartes de communication, de la norme de réseau du réseau accédé par la carte de communication, et d'un état de double carte simultané du terminal.

4. Procédé selon la revendication 3, dans lequel le rapport, par le terminal, des ressources de communication disponibles au dispositif réseau sur la base du nombre de cartes de communication, de la norme réseau du réseau accédé par la carte de communication, et d'un état de simultanéité double carte du terminal, comprend :
le rapport respectif, par le terminal lorsque la carte de communication cible comprend la première carte de communication et une seconde carte de communication, que le terminal accède au réseau LTE, et que le terminal n'est pas dans l'état de simultanéité double carte, de N premiers CC au dispositif réseau pour la première carte de communication et la seconde carte de communication ; ou
le rapport respectif, par le terminal, de M seconds CC au dispositif réseau pour la première carte de communication et la seconde carte de communication lorsque la carte de communication cible comprend la première carte de communication et la seconde carte de communication, que le terminal accède au réseau NR, et que le terminal n'est pas dans l'état de simultanéité double carte.

5. Procédé selon la revendication 3, dans lequel le rapport, par le terminal, des ressources de communication disponibles au dispositif réseau sur la base du nombre de cartes de communication, de la norme réseau du réseau accédé par la carte de communication, et d'un état de simultanéité double carte du terminal, comprend :
le rapport respectif, par le terminal, de N-1 premiers CC au dispositif réseau pour la première carte de communication et une seconde carte de communication lorsque la carte de communication cible comprend la première carte de communication et la seconde carte de communication, que le terminal accède au réseau LTE, et que le terminal est dans l'état de simultanéité double carte ; ou
le rapport respectif, par le terminal, de M-1 seconds CC au dispositif réseau pour la première carte de communication et la seconde carte de communication lorsque la carte de communication cible comprend la première carte de communication et la seconde carte de communication, que le terminal accède au réseau NR, et que le terminal est dans l'état de simultanéité double carte.

6. Procédé selon la revendication 5, dans lequel la détermination, par le terminal, d'une carte de communication cible pour effectuer un service de données, et l'allocation de ressources de communication à la carte de communication cible, comprend :
l'allocation, par le terminal lorsque le terminal détermine que le service de données provient de la première carte de communication, et que le terminal accède au réseau LTE, d'au plus N-1 premiers CC à la première carte de communication, et l'allocation d'un premier CC à la seconde carte de communication ; ou
allocation, par le terminal lorsque celui-ci détermine que le service de données provient de la première carte de communication, et que le terminal accède au réseau NR, d'au plus M-1 secondes CC à la première carte de communication, et allocation d'une seconde CC à la seconde carte de communication.

7. Procédé selon la revendication 5, dans lequel la détermination, par le terminal, d'une carte de communication cible pour effectuer un service de données, et l'allocation de ressources de communication à la carte de communication cible, comprend :
allocation, par le terminal lorsque celui-ci détermine que le service de données provient de la seconde carte de communication, et que le terminal accède au réseau LTE, d'au plus N-1 premières CC à la seconde carte de communication, et allocation d'une première CC à la première carte de communication ; ou
allocation, par le terminal lorsque celui-ci détermine que le service de données provient de la seconde carte de communication, et que le terminal accède au réseau NR, d'au plus M-1 secondes CC à la seconde carte de communication, et allocation d'une seconde CC à la première carte de communication.

8. Procédé selon la revendication 5, dans lequel la détermination, par le terminal, d'une carte de communication cible pour effectuer un service de données, et l'allocation de ressources de communication à la carte de communication cible, comprend :
allocation, par le terminal, de ressources de communication à la première carte de communication et à la seconde carte de communication en fonction de la qualité réseau de la première carte de communication, de la qualité réseau de la seconde carte de communication, des données de trafic de la première carte de communication, et des données de trafic de la seconde carte de communication lorsque le terminal détermine que le service de données provient de la première carte de communication et de la seconde carte de communication.

9. Procédé selon la revendication 8, dans lequel la qualité réseau est directement proportionnelle et positivement corrélée aux ressources de communication ; et les données de trafic sont positivement corrélées aux ressources de communication.

10. Appareil de communication, dans lequel l'appareil de communication comprend un processeur (901) et une mémoire (902), dans lequel
la mémoire est configurée pour stocker des instructions de programme ; et
le processeur est configuré pour lire les instructions de programme stockées dans la mémoire afin d'amener l'appareil de communication à exécuter le procédé selon l'une quelconque des revendications 1 à 9.

11. Support de stockage lisible par ordinateur, dans lequel le support de stockage lisible par ordinateur stocke un programme informatique qui, lorsqu'il est exécuté par un processeur, amène le processeur à exécuter le procédé selon l'une quelconque des revendications 1 à 9.

12. Un système de puce (100), qui est appliqué à un appareil de communication, comprenant un ou plusieurs processeurs (1020) ; dans lequel les un ou plusieurs processeurs sont configurés pour exécuter des instructions informatiques pour amener l'appareil de communication à mettre en œuvre le procédé selon l'une quelconque des revendications 1 à 9.
